# EUROPEAN PATENT APPLICATION

(11) **EP 2 230 167 A2**
(43) Date of publication of application: **22.09.2010**
(21) Application number: 10250404.0
(22) Date of filing: 05.03.2010
(51) Int. Cl.: B62M 3/00

(54) **Bicycle crank shaft assembly**

(30) Priority: 19.03.2009 US 161690 P
(71) Applicant: Cycling Sports Group, Inc., Bethel, Connecticut 06801-2858 (US)
(72) Inventor: Dodman, Christopher Philip, 4057 Basel (CH)
(74) Representative: Chiva, Andrew Peter

(57) **Abstract**

A bicycle crank shaft assembly (100) includes first (125), second (145) and third (150) members. The first member (125) defines first (crank axle), second (first segment of first crank arm) and third (first segment of second crank arm) portions (130,135,140), the first, second and third portions of the first member being integral and continuous with each other and having a generally s-shaped configuration. The second member (145) defines a second segment of the first crank arm (105), and the third member (150) defines a second segment of the second crank arm (110). The first and second segments (135,145) of the first crank arm (105) are bonded to each other with a bond seam (155) therebetween to define the first crank arm (105), and the first and second segments (140,150) of the second crank arm (110) are bonded to each other with a bond seam (160) therebetween to define the second crank arm (110). At least one of the crank axle (115), the first crank arm (105) and the second crank arm (110) is hollow.

## Description

### CROSS REFERENCE TO RELATED APPLICATIONS

This application claims the benefit of U.S. Provisional Application Serial No. 61/161,690, filed March 19, 2009, which is incorporated herein by reference in its entirety.

### BACKGROUND OF THE INVENTION

The present disclosure relates generally to a bicycle crank shaft assembly, and particularly to a bicycle crank shaft assembly having bonded segments that define a hollow interior cavity.

Traditional bicycle crank assemblies include: separate left and right crank arms spline-fit into, bolted onto, or clamped onto a separate crank axle; separate left and right crank arms each having a portion of a crank axle formed therewith and connected together via a centrally disposed spline coupling; and, an integrally formed right-side crank arm with crank axle and a separately formed left-side crank arm coupled thereto. Materials used for traditional bicycle crank assemblies include steel, aluminum and fiber reinforced polymers. Depending on the material used, such assemblies may be solid in structure or include hollow portions. Since there is a desire in the art to provide a bicycle crank shaft assembly having a high strength-to-weight ratio, light weight materials and hollow structures are typically used. However, existing bicycle crank assemblies tend to have structures fabricated by methods that inherently limit the strength-to-weight ratio attainable. Accordingly, there is a need in the art for an improved bicycle crank shaft assembly and method of making the same that does not inherit the limitations of the existing art.

### BRIEF DESCRIPTION OF THE INVENTION

An embodiment of the invention includes a bicycle crank shaft assembly having first, second and third members. The first member defines a first portion, a second portion and a third portion, the first portion defining a crank axle, the second portion defining a first segment of a first crank arm disposed at a first end of the crank axle, and the third portion defining a first segment of a second crank arm disposed at a second end of the crank axle, the first, second and third portions of the first member being integral and continuous with each other and having a generally s-shaped configuration. The second member defines a second segment of the first crank arm, and the third member defines a second segment of the second crank arm. The first and second segments of the first crank arm are bonded to each other with a bond seam therebetween to define the first crank arm, and the first and second segments of the second crank arm are bonded to each other with a bond seam therebetween to defme the second crank arm. At least one of the crank axle, the first crank arm and the second crank arm is hollow.

Another embodiment of the invention includes a bicycle crank shaft assembly having first and second members. The first member defines a first segment of a crank axle disposed between a first segment of a first crank arm and a first segment of a second crank arm, each of the first segments being integral and continuous with each other to define a generally s-shaped configuration. The second member defines a second segment of the crank axle disposed between a second segment of the first crank arm and a second segment of the second crank arm, each of the second segments being integral and continuous with each other to define a generally s-shaped configuration. The first and second members are bonded to each other at respective mating surfaces with a bond seam therebetween, thereby forming a unitary form comprising the crank axle disposed between the first crank arm and the second crank arm. At least one of the crank axle, the first crank arm and the second crank arm is hollow.

### BRIEF DESCRIPTION OF THE DRAWINGS

Referring to the exemplary drawings wherein like elements are numbered alike in the accompanying Figures:

Figures 1-4 depict an embodiment of a bicycle crank shaft assembly in right-side perspective view, left-side perspective view, alternative left-side perspective view, and top plan view, respectively, in accordance with an embodiment of the invention;

Figure 5 depicts a top plan view of the bicycle crank shaft assembly in accordance with an embodiment of the invention;

Figures 6 and 7 depict first and second cross sections of a crank arm of the bicycle crank shaft assembly in accordance with an embodiment of the invention;

Figures 8-11 depict in block diagram fashion a process of making the bicycle crank shaft assembly of Figures 1-7;

Figures 12-13 depict in block diagram fashion an alternative process to that of Figures 8-11;

Figure 14 depicts in exploded isometric view the bicycle crank shaft assembly of Figures 1-5; and

Figures 15 and 16 depict perspective views of an alternative bicycle crank shaft assembly in accordance with an embodiment of the invention.

### DETAILED DESCRIPTION OF THE INVENTION

An embodiment of the invention, as shown and described by the various figures and accompanying text, provides a bicycle crank shaft assembly having in the alternative two or three parts that are separately fabricated and then bonded together to form a unitary hollow crank assembly. Each of the separately fabricated parts are formed from a single continuous block, slug, or billet of machinable, forgable or castable material, such as aluminum for example, or are formed via a compression molding process using a compression moldable material, such as carbon fiber reinforced polymer for example. While embodiments are described employing aluminum as a machinable metal, it will be appreciated that other machinable metals such as stainless steel may be employed with satisfactory results, and while other embodiments are described employing carbon fiber reinforced polymers as a moldable material, it will be appreciated that other moldable materials such as glass reinforced thermosets may be employed with satisfactory results.

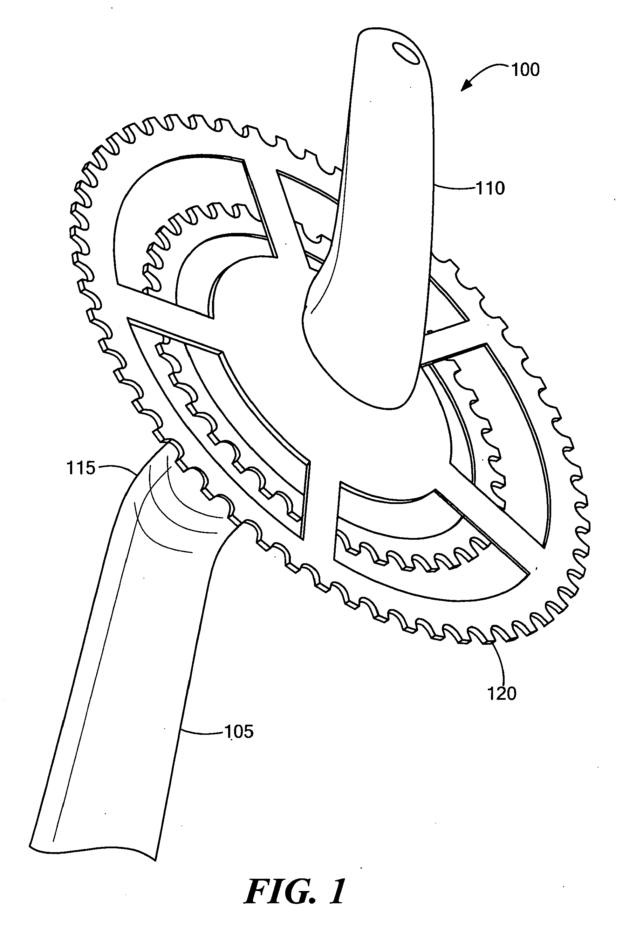

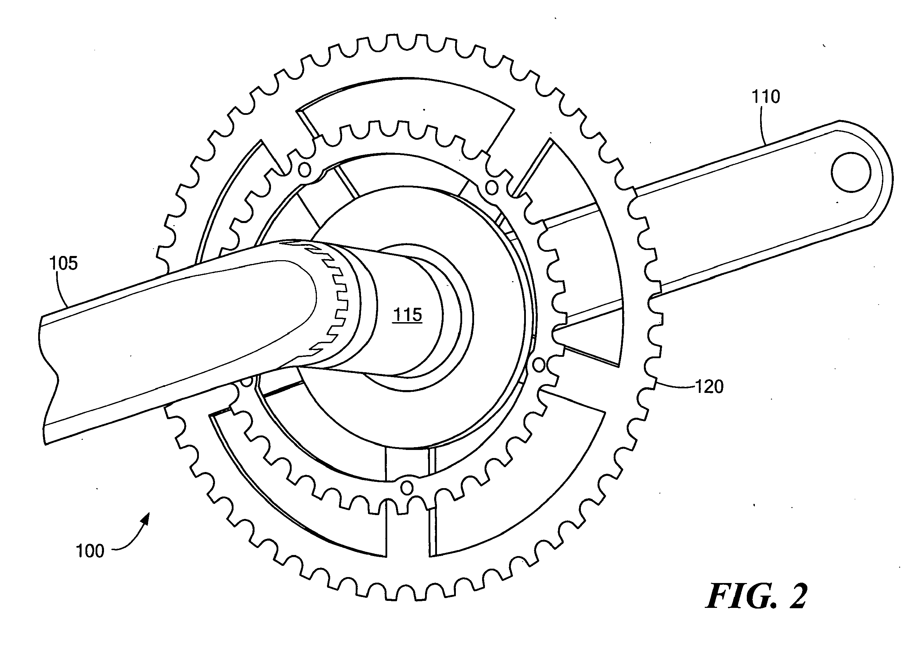

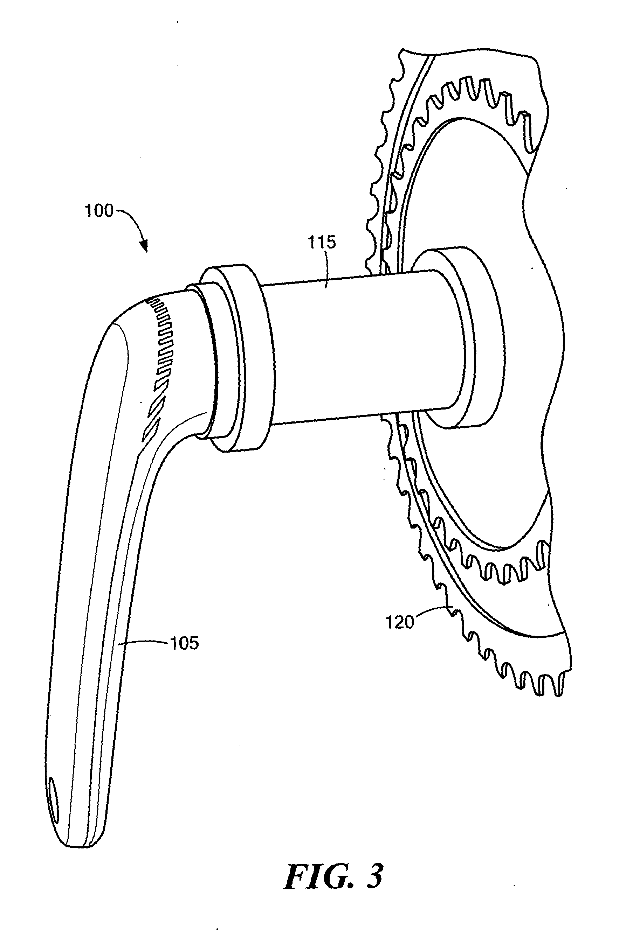

Referring to Figures 1-4 collectively, an embodiment of a bicycle crank shaft assembly 100 is depicted in right-side perspective view, left-side perspective view, alternative left-side perspective view, and top plan view, respectively. The bicycle crank shaft assembly 100 includes a left (first) crank arm 105, a right (second) crank arm 110, and a crank axle 115 disposed between the crank arms 105, 110. For completeness, a chain spider/sprocket assembly 120 is illustrated attached to the right side of the crank axle 115, however, the bicycle crank shaft assembly 100 referred to herein is specifically directed to the arrangement including the crank arms 105, 110 and the crank axle 115.

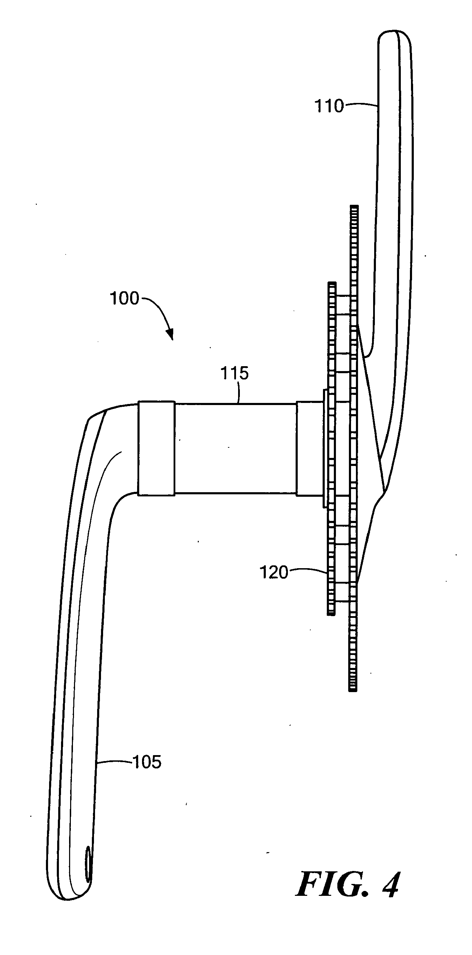

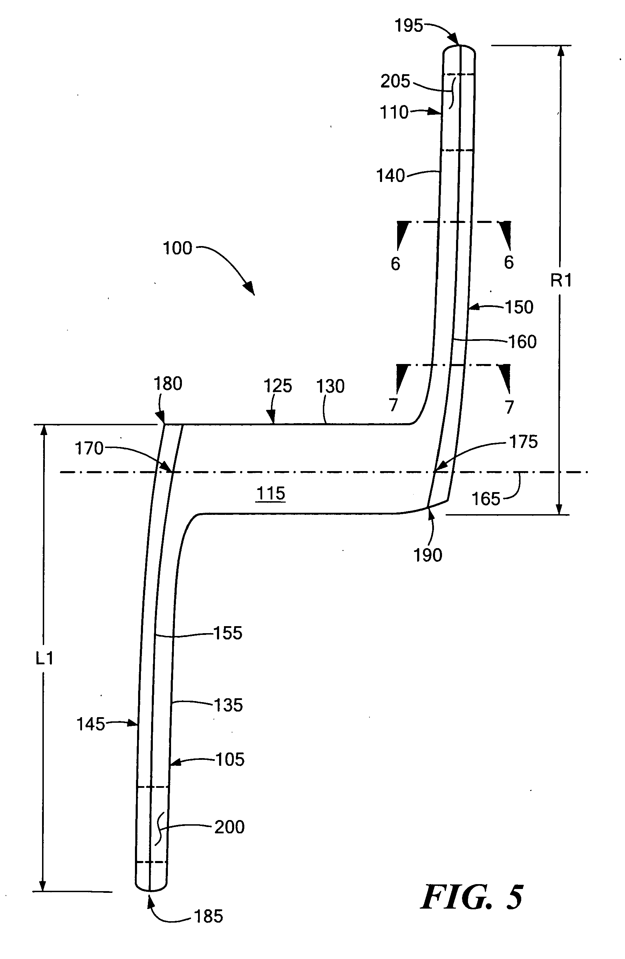

Figure 5 depicts a top plan view of bicycle crank shaft assembly 100 similar to that of Figure 4 but with the chain spider/sprocket assembly 120 omitted from illustration. As depicted, the bicycle crank shaft assembly 100 includes a first member 125 defining a first portion 130, a second portion 135 and a third portion 140. The first portion 130 defines the crank axle 115, the second portion 135 defines a first segment (also herein referred to by reference numeral 135) of the left crank arm 105 disposed at a first end of the crank axle 115, and the third portion 140 defines a first segment (also herein referred to by reference numeral 140) of the right crank arm 110 disposed at a second end of the crank axle 115. The first 130, second 135 and third 140 portions of the first member 125 are integral and continuous with each other and have a generally s-shaped configuration as illustrated. A second member 145 defines a second segment (also herein referred to by reference numeral 145) of the left crank arm 105, and a third member 150 defines a second segment (also herein referred to by reference numeral 150) of the right crank arm 110. The first and second segments 135, 145 of the left crank arm 105 are bonded to each other with a bond seam 155 therebetween to define the left crank arm 105. The first and second segments 140, 150 of the right crank arm 110 are bonded to each other with a bond seam 160 therebetween to define the right crank arm 110. In an embodiment, at least one of the crank axle 115, the left crank arm 105 and the right crank arm 110 is hollow. In an alternative embodiment, each of the crank axle 115, the left crank arm 105 and the right crank arm 110 are hollow, as will be evident by further discussion below.

As further depicted in Figure 5, the crank axle 115 includes a central crank axis 165, with the second portion 135 of the first member 125 extending substantially perpendicular to the crank axis 165 from the first end 170, and with the third portion 140 of the first member 125 extending substantially perpendicular to the crank axis 165 from the second end 175. The second member 145 has a longitudinal dimension L1 that extends substantially perpendicular to the crank axis 165 from the first end 170, and the third member 150 has a longitudinal dimension R1 that extends substantially perpendicular to the crank axis 165 from the second end 175. The left crank arm 105 has a proximal end 180 and a distal end 185, the proximal end 180 being proximate the crank axle 165. The right crank arm 110 has a proximal end 190 and a distal end 195, the proximal end 190 being proximate the crank axle 165. In an embodiment, the bond seam 155 of the left crank arm 105 is non-linear between its respective proximal 180 and distal 185 ends, and the bond seam 160 of the right crank arm 110 is non-linear between its respective proximal 190 and distal 195 end. To facilitate attachment of pedals (not shown but readily known in the art of bicycles), the distal end 185 of the left crank arm 105 includes a hole 200 having an axial orientation substantially parallel with an axis of the crank axle 165, and the distal end 195 of the right crank arm 110 includes a hole 205 having an axial orientation substantially parallel with the axis of the crank axle 165.

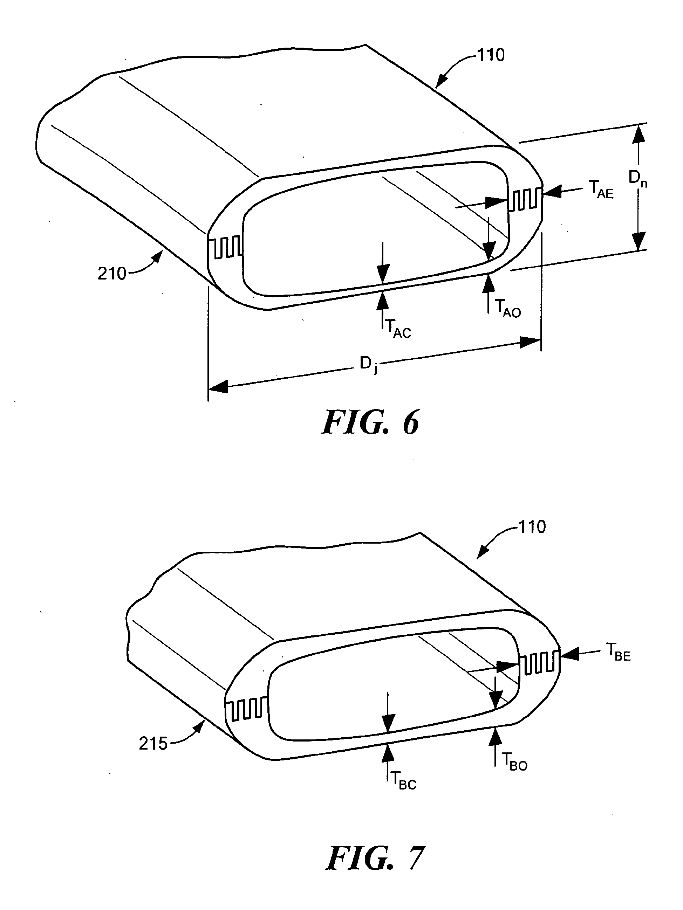

Referring now to Figures 6 and 7, a first cross section 210 of the second crank arm 110 is depicted proximate the distal end 195 (see Figure 6), and a second cross section 215 of the same second crank arm 110 is depicted proximate the proximal end 190 (see Figure 7), illustrating the second crank arm 110 to be hollow between the proximal 190 and distal 195 ends. While only the second crank arm 110 is referred to above in reference to Figures 6 and 7, it will be appreciated that first crank arm 105 and second crank arm 110 are typically identical in structure, and therefore any discussion relating to Figures 6 and 7 applies equally to both first and second crank arms 105, 110. In Figures 6 and 7, the first 210 and second 215 cross sections are box-shaped with a major dimension Dj longer than a minor dimension Dn, with the major dimension Dj extending in a direction substantially perpendicular to a central axis 165 of the crank axle 115. In an embodiment, a side wall thickness T_{AC} or T_{AB} toward the center of the major dimension Dj is thinner than a side wall thickness T_{AO} or T_{BO} toward an outer region (either end of the box-shaped cross section) of the major dimension Dj. In the same or alternate embodiment, the cross section increases toward the proximal end (such as by an increase in the major and/or minor dimensions Dj, Dn for example), which would allow the side wall thickness T_{BC} (closer to the proximal end 190) to be thinner than the side wall thickness T_{AC} (closer to the distal end 195). By selectively forming the first and second crank arms 105, 110 with a varying side wall thickness from the proximal end 190 to the distal end 195, and/or across the major dimension Dj, an optimum strength-to-weight ratio can be achieved, such that the stress distribution along the length of the crank arm is substantially uniform from proximal end to distal end. In an embodiment, the first and second cross sections 210, 215 have respective end wall thicknesses T_{AE} and T_{BE} that are thicker than the associated side wall thicknesses T_{AC} and T_{BC}, which is where the bond joints of respective mating surfaces of the crank arms are located. Placing the bond joints farthest away from the neutral axis of a respective crank arm is an optimal situation since joints typically require an overlap that naturally creates a thicker section, and placing the thickest section farthest away from the neutral axis provides for a higher stiffness-to-weight ratio.

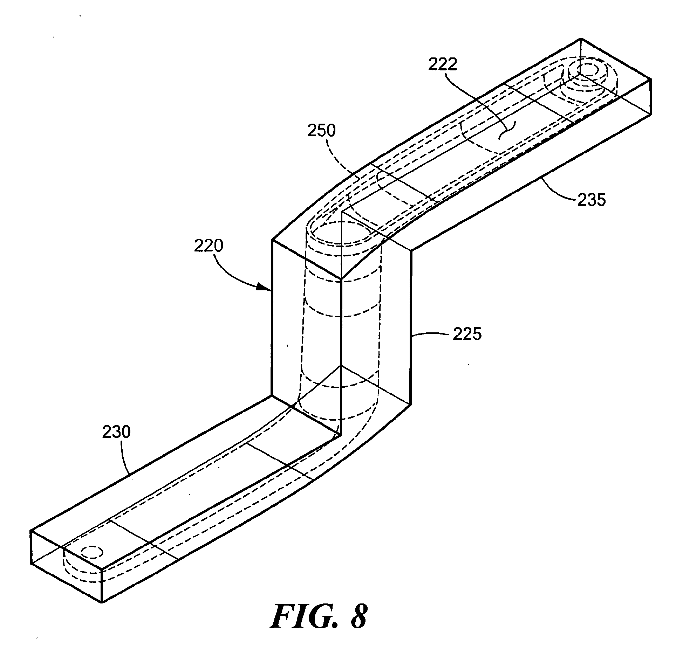

With reference now to Figures 8-11, a process of making the bicycle crank shaft assembly 100 depicted by Figures 1-7 will now be described.

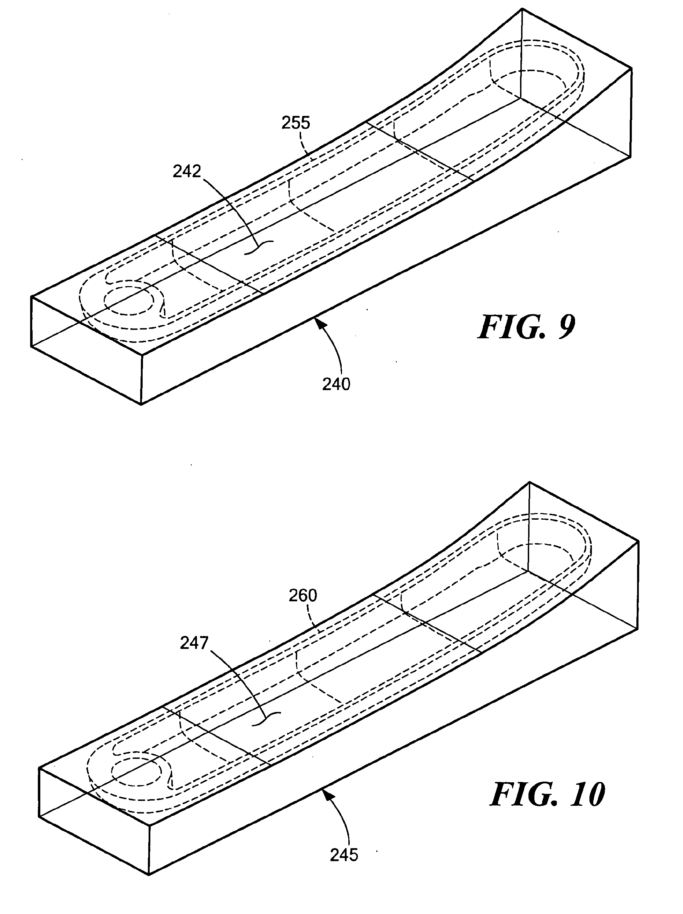

Figure 8 depicts a first solid form 220 having a center section 225 and two end sections 230, 235, where the center section 225 is used to create the crank axle 115, and the two end sections 230, 235 are used to create the first segments 135, 140 of the left and right crank arms 105, 110. Figure 9 depicts a second solid form 240, which is used to create the second segment 145 of the left crank arm 105, and Figure 10 depicts a third solid form 245, which is used to create the second segment 150 of the right crank arm 110. As used herein, the term "solid form" means a continuous block, slug, or billet of machinable, forgable or castable material, such as aluminum for example, but also encompasses any material, metal or otherwise, suitable for the purposes disclosed herein.

From the first solid form 220, a first amount of material 222 is removed to define an interior surface 250 (depicted by dashed lines in Figure 8) of the first member 125, thereby defining a modified first solid form. From the second solid form 240, a first amount of material 242 is removed to define an interior surface 255 (depicted by dashed lines in Figure 9) of the second member 145, thereby defining a modified second solid form. From the third solid form 245, a first amount of material 247 is removed to define an interior surface 260 (depicted by dashed lines in Figure 10) of the third member 150, thereby defining a modified third solid form.

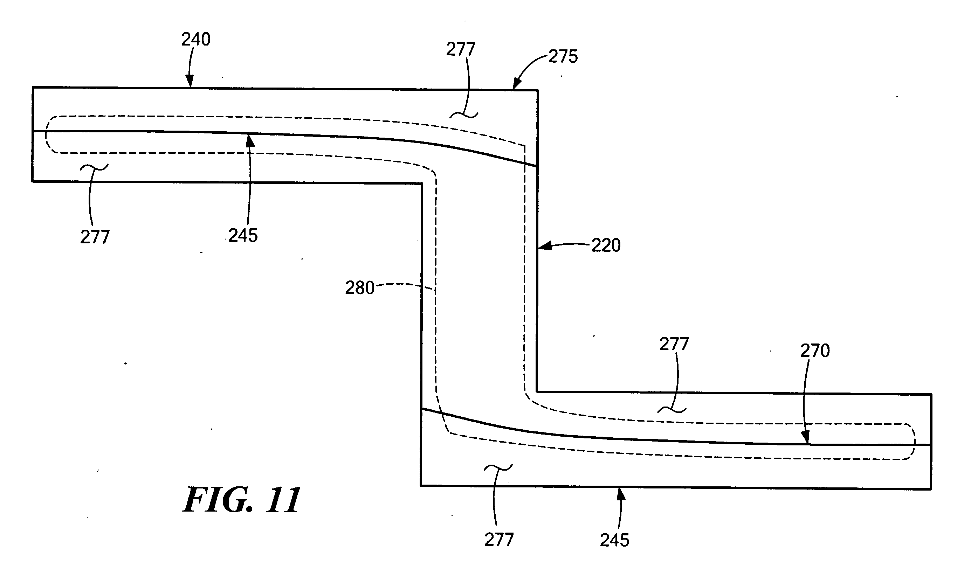

Referring now to Figure 11, the modified second solid form 240 and the modified third solid form 245 are bonded to the modified first solid form 220 at respective mating surfaces 265, 270 via any suitable bonding medium, such as welding (gas-metal-arc-welding, tungsten-inert-gas-welding, metal-inert-gas-welding, ultrasonic welding, friction stir welding), brazing or any other processing means that form a metallurgical bond, or an adhesive agent such as epoxy for example, or any other processing means that forms a chemically reactive bond. As used herein, the term metallugical bond means a bond formed by the intermingling of metal at an interface of adjacent parts being bonded or joined together. As used herein, the term chemically reactive bond means a bond formed by application of one or more chemically reactive constituents between adjacent parts being bonded or joined together. As a result of the bonding, a unitary form 275 is defined. As used herein, the term "unitary form" means a single element formed from one or more sub-elements in such a manner as to be permanently formed, that is, not capable of being easily or intentionally taken apart, and being absent a joint or coupling between the sub-elements that could loosen under the application of a load or stress applied to the unitary form.

After the unitary form 275 is permanently defined, a second amount of material 277 is removed from the first solid form 220, the second solid form 240, and the third solid form 245 to define an exterior surface 280 (depicted by dashed lines in Figure 11) of the first member 125, the second member 145, and the third member 150, respectively, thereby defming the crank axle 115, the left crank arm 105, and the right crank arm 110 of crank shaft assembly 100, as depicted in detail in Figures 1-5. In an embodiment, the resulting crank shaft assembly 100 is formed from epoxy bonded aluminum.

As will be appreciated from the foregoing process description, involving removal of material to define interior surfaces 250, 255, 260, bonding of modified solid forms 220, 240, 245 to define a unitary form 275, and further removal of material to define exterior surface 280, an embodiment of the unitary form 275 defines a hollow interior cavity that extends in a continuous uninterrupted manner from the distal end 185 of the left crank arm 105 to the distal end 195 of the right crank arm 110, which ultimately results in each of the crank axle 115, the left crank arm 105 and the right crank arm 110 being hollow and defining a continuous hollow interior space of the crank shaft assembly 100.

Further processing of the unitary form 275 involves removal of material from the distal end 185 of the left crank arm 105 to define the first pedal bore (hole) 200, and removal of material from the distal end 195 of the right crank arm 110 to define the second pedal bore (hole) 205.

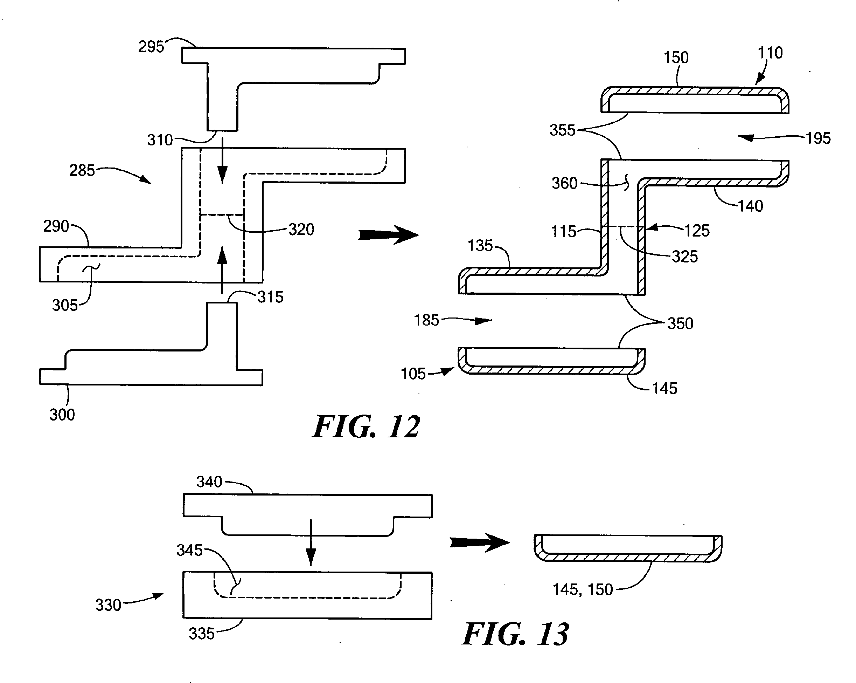

While the foregoing description of a process referencing Figures 8-11 involve removal of material from solid forms, it is contemplated that casting, or forging metallic, or compression molding of a suitable reinforced polymer (such as carbon fiber reinforced epoxy for example) is equally suitable for making the bicycle crank shaft assembly 100 depicted in Figures 1-7, where Figures 12-13 will now be referenced to describe this alternative process.

Figure 12 depicts a first mold 285 having a female section 290 and two male sections 295, 300. The female section 290 has an internal cavity 305 in which male sections 295, 300 fit with clearance therebetween to allow for a flowable uncured polymer to be disposed (and later cured through known molding techniques). Ends 310, 315 of respective male sections 295, 300 fit up against each other when the mold is closed, thereby defining the location of a mold flash line 320 that will be discussed further below. As will be known in the art of molding, other configurations for male sections 295, 300 may be employed to create different flash line details, such as by using bypass punches for example. From the first mold 285, the first member 125 is formed (by a known compression molding process, such as for example: inserting a shot of uncured fiber reinforced thermoset polymer into the mold; closing the mold to form the shot into a molded part; heating the molded part under pressure to cure it; and, opening the mold to release the cured molded part). As can be appreciated from Figure 12, the first member 125 is capable of having all of the structural details of crank axle 115, first segment 135 of left crank arm 105, and first segment 140 of right crank arm 110. As mentioned above, flash line 320 in mold 285 may result in a thin flash membrane 325 being formed inside first member 125, which can be easily removed by any known mold de-flashing process.

Figure 13 depicts a second mold 330 having a female section 335 and a male section 340. The female section 335 has an internal cavity 345 in which male section 340 fits with clearance therebetween to allow for a flowable uncured polymer to be disposed for subsequent molding, as discussed above. From the second mold 330, the second and third members 145, 150 are formed (in a manner similar to that discussed above). As can be appreciated from Figure 13, the second and third members 145, 150 are capable of having all of the structural details of respective second segments of the left and right crank arms 105, 110.

Referring back to Figure 12, the second 145 and third 150 members are bonded to first member 125 at respective mating surfaces 350, 355 using a suitable bonding agent or joining process for securely and permanently bonding carbon reinforced polymer material, thereby defining the bicycle crank shaft assembly 100.

From the foregoing description of Figures 12 and 13, it will be appreciated that some details and illustrations have been omitted therefrom for purposes of simplification, such as mold features creating holes 200, 205 that form the above-noted pedal bores in proximal ends 185, 195 of first and second crank arms 105, 110, for example. With consideration thereof, it will be appreciated from the disclosure herein, taken in its entirety, that certain features from one set of figures relating to one embodiment are equally applicable to another set of figures relating to another embodiment. Such applicability is fully contemplated and considered to be encompassed by embodiments of the invention disclosed and illustrated herein.

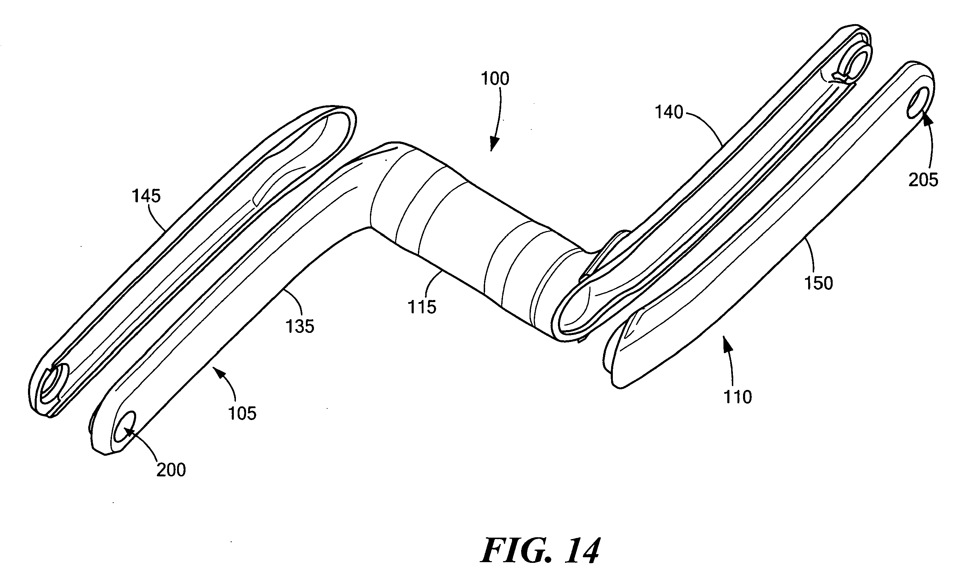

Referring briefly to Figure 14, an exploded isometric view of bicycle crank shaft assembly 100 is depicted with the foregoing details, such as holes 220, 205, illustrated.

As before, the molded bicycle crank shaft assembly 100 resulting from the molding process of Figures 12 and 13 define a hollow interior cavity 360 that extends in a continuous uninterrupted manner from the distal end 185 of the first crank arm 105 to the distal end 195 of the second crank arm 110.

Alternative to the carbon fiber reinforced polymer compression molding process discussed above, Figures 12 and 13 may also be used to illustrate a casting or forging process where first, second and third members 125, 145, 150 are cast out of aluminum, and where the above-mentioned bonding involves metallurgical bonding as opposed to adhesive bonding of the carbon reinforced polymer. Such a casting process is also herein contemplated and considered within the scope of embodiments of the invention disclosed and illustrated herein.

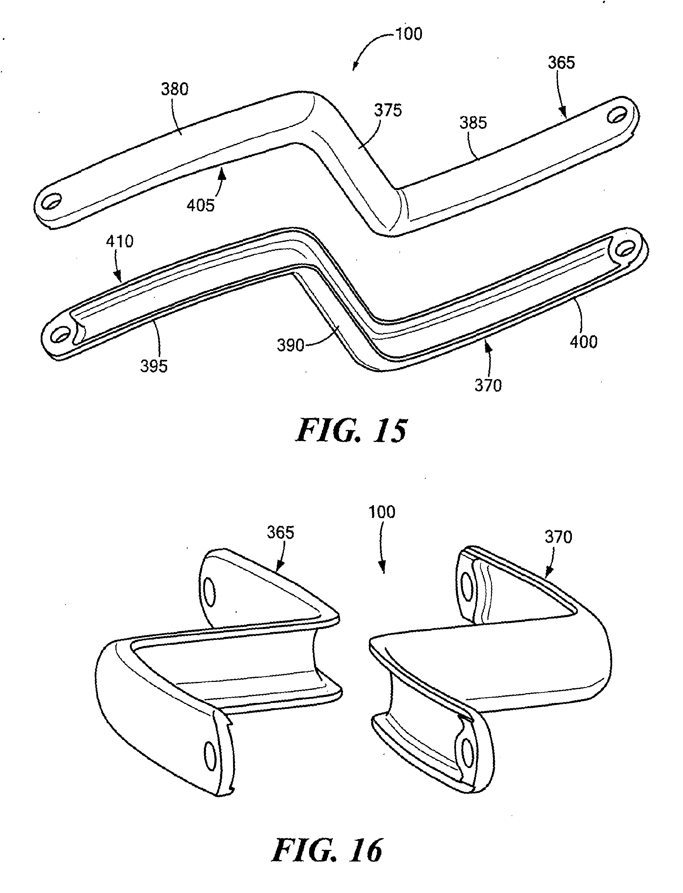

In an alternative embodiment, and with reference now to Figures 15 and 16, bicycle crank shaft assembly 100 may be formed by bonding two continuous s-shaped members 365, 370 together to form a hollow assembly (the concavity of each s-shaped member being more readily seen by reference to Figure 16). The first member 365 defines a first segment 375 of the crank axle 115, a first segment 380 of the left crank arm 105, and a first segment 385 of the right crank arm 110, where each of the first segments 375, 380, 385 are integral and continuous with each other to define the generally s-shaped member 365. As used herein, the term "integral and continuous" means a material form where the material in one area has seamless flow continuity with the material of another area. Similar to the first member 365, the second member 370 defines a second segment 390 of the crank axle 115, a second segment 395 of the left crank arm 105, and a second segment 400 of the right crank arm 110, where each of the second segments 390, 395, 400 are integral and continuous with each other to define the generally s-shaped member 370. To form the bicycle crank shaft assembly 100, the first and second members 365, 370 are bonded to each other at respective mating surfaces 405, 410 with a bond seam defined therebetween, thereby forming a unitary form comprising the crank axle 115 disposed between the left crank arm 105 and the right crank arm 110, wherein at least one of, and in an embodiment all of, the crank axle 115, the left crank arm 105 and the right crank arm 110 is/are hollow. In an embodiment where each of the crank axle 115, the left crank arm 105, and the right crank arm 110 are hollow, the unitary form collectively defines a continuous hollow interior space of the crank shaft assembly 100 that extends from the distal end 185 of the left crank arm 105 to the distal end 195 of the right crank arm 110, as previously discussed.

The resulting crank shaft assembly 100 associated with Figures 15 and 16 may be made using any of the previously discussed processes. That is, first and second members 365, 370 may be machined, cast or forged out of aluminum or any other suitable metal, or may be molded out of carbon reinforced polymer or any other suitable molding material. More specifically, but without limitation, material may be removed from a first solid form to define both an interior surface and an exterior surface of the first member 365, and material may be removed from a second solid form separate from the first solid form to define both an interior surface and an exterior surface of the second member 370, with the first and second members then being bonded to each other at the respective mating surfaces to define the unitary form having the generally s-shaped configuration. Alternatively, a first mold (casting mold or compression mold) having female and male sections may be used to form the first member 365, and a second mold having female and male sections may be used to form the second member 370, with the first and second members being bonded to each other at the respective mating surfaces to define the unitary form having the generally s-shaped configuration. In an embodiment, first and second members 365, 370 are identical in structure with mating surfaces of one instance that mate upon respective mating surfaces of a second instance of the same structure, thereby permitting usage of one type of solid form for machining, or one type of mold for molding.

In a similar manner, the resulting crank shaft assembly 100 associated with Figures 15 and 16 may have any of the advantageous cross sections previously discussed, such as wall thicknesses that vary from the proximal end 180, 190 to the respective distal end 185, 195 of respective left and right crank arms 105, 110, and/or wall thicknesses that are thicker nearer the associated proximal end as compared to the associated distal end, and/or box-shaped cross sections having side wall thicknesses that vary from one end of the cross section to the other end of the cross section, and/or side wall thicknesses that are thinner nearer the center of the cross section as compared to an end of the cross section.

In view of the foregoing, it will be appreciated that while certain combinations of features have been described herein in connection with one embodiment and one set of figures, it will be appreciated that these certain combinations are for illustration purposes only and that any combination of any of the features disclosed herein may be employed with any embodiment and any set of figures in accordance with an embodiment of the invention. Any and all such combinations are contemplated herein and are considered within the scope of the invention disclosed.

As disclosed, some embodiments of the invention may include some of the following advantages: easy access to both sides of all surfaces on the crank arms during fabrication, thereby allowing accurate manufacturing of optimized variable wall thicknesses; location of bonding joints farthest away from the neutral axis of each crank arm, thereby providing improved stiffness-to-weight ration; and, formation of thinner wall sections closest to the neutral axis provides for improved stiffness-to-weight ratio.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A bicycle crank shaft assembly (100), comprising;
a first member (125) defining a first portion (130), a second portion (135) and a third portion (140), the first portion (130) defining a crank axle (115), the second portion (135) defining a first segment of a first crank arm (105) disposed at a first end of the crank axle (115), and the third portion (140) defining a first segment of a second crank arm (110) disposed at a second end of the crank axle (115), the first, second and third portions of the first member (125) being integral and continuous with each other and having a generally s-shaped configuration;
a second member (145) defining a second segment of the first crank arm (105);
and
a third member (150) defining a second segment of the second crank arm (110); wherein the first and second segments (135,145) of the first crank arm (105) are bonded to each other with a bond seam (155) therebetween to define the first crank arm (105);
wherein the first and second segments (140,150) of the second crank arm (110) are bonded to each other with a bond seam (160) therebetween to define the second crank arm (110); and
wherein at least one of the crank axle (115), the first crank arm (105) and the second crank arm (110) is hollow.

2. The bicycle crank shaft assembly of Claim 1, wherein the first (125), the second (145), and the third (150) members comprise metal, optionally wherein the metal comprises aluminum.

3. The bicycle crank shaft assembly of any preceding Claim, wherein:
the crank axle (115) has a central crank axis (165);
the second portion (135) of the first member (125) extends substantially perpendicular to the crank axis from the first end;
the third portion (140) of the first member (125) extends substantially perpendicular to the crank axis (115) from the second end;
the second member (145) has a longitudinal dimension (L1) that extends substantially perpendicular to the crank axis (165) from the first end (180); and
the third member (150) has a longitudinal dimension (R1) that extends substantially perpendicular to the crank axis (165) from the second end (190).

4. The bicycle crank shaft assembly of any preceding Claim, wherein:
the first crank arm (105) has a proximal end (180) and a distal end (185), the proximal end being proximate the crank axle (115);
the second crank arm (110) has a proximal end (190) and a distal end (195), the proximal end being proximate the crank axle (115);
the bond seam (155) of the first crank arm (105) is non-linear between its respective proximal and distal ends (180,185); and
the bond seam (160) of the second crank arm (110) is non-linear between its respective proximal and distal end (190,195).

5. The bicycle crank shaft assembly of any preceding Claim, wherein:
the distal end (185) of the first crank arm (105) comprises a hole (200) having an axial orientation substantially parallel with an axis of the crank axle (165); and
the distal end (195) of the second crank arm (110) comprises a hole (205) having an axial orientation substantially parallel with the axis of the crank axle (165).

6. The bicycle crank shaft assembly of any preceding Claim, wherein:
each of the crank axle (115), the first crank arm (105) and the second crank arm (110) are hollow and preferably define a continuous hollow interior space of the crank shaft assembly (100) extending from a distal end (185) of the first crank arm (105) to a distal end (195) of the second crank arm (110).

7. The bicycle crank shaft assembly of any preceding Claim, wherein each of the first crank arm (105) and the second crank arm (110) are hollow and comprise:
a proximal end (180,190) and a distal end (185,195), the proximal end being proximate the crank axle (115);
a cross section (210,215) having a wall thickness that varies from the proximal end to the distal end, optionally wherein at least one of the wall thickness is thinner nearer the proximal end as compared to the distal end.

8. The bicycle crank shaft assembly of Claim 7, wherein the cross section (210,215) is box-shaped with a major dimension (Dⱼ) longer than a minor dimension (Dₙ), the major dimension extending in a direction substantially perpendicular to a central axis of the crank axle (165), optionally wherein the minor dimension defines side walls of the cross section, wherein the side walls have a thickness (T_{AE},T_{BE}) that vary from one end of the cross section to the other end of the cross section, and preferably wherein the sidewalls are thinner nearer the center of the cross section as compared to an end of the cross section.

9. The bicycle crank shaft assembly of any preceding Claim made by the process of:
from a first solid form (220), removing a first amount of material (222) therefrom to define an interior surface (250) of the first member (125), thereby defining a modified first solid form;
from a second solid form (240) separate from the first solid form (220), removing a first amount of material (242) therefrom to define an interior surface (255) of the second member (145), thereby defining a modified second solid form;
from a third solid form (245) separate from the first (220) and second (240) solid forms, removing a first amount of material (247) therefrom to define an interior surface (260) of the third member, thereby defining a modified third solid form;
bonding the modified second solid form (240) to the modified first solid form (220) at respective mating surfaces (265), and bonding the modified third solid form (245) to the modified first solid form (220) at respective mating surfaces (270), thereby defining a unitary form (275); and
removing a second amount of material (277) from the first solid form (220), a second amount of material (277) from the second solid form (240), and a second amount of material (277) from the third solid form (245) to define an exterior surface of the first member, the second member, and the third member, respectively, thereby defining the crank axle (115), the first crank arm (105), and the second crank arm (110).

10. The bicycle crank shaft assembly of Claim 9, further made by the process of removing material from a distal end (185) of the first crank arm (105) to define a first pedal bore (200) therein, and removing material from a distal end (195) of the second crank arm (110) to define a second pedal bore (205) therein.

11. The bicycle crank shaft assembly of Claim 9 or 10, wherein each of the first solid form (220), the second solid form (240), and the third solid form (245) comprise aluminum, and wherein each of the bonding steps comprise either chemically reactive bonding, or metallurgical bonding.

12. The bicycle crank shaft assembly of any one of Claims 1-8 made by the process of:
from a first mold (285) having female (290) and male (295) sections, forming the first member (125);
from a second mold (330) having female (335) and male (340) sections, forming the second member (145) and the third member (150); and
bonding the second member and the third member to the first member at respective mating surfaces (350,355), thereby defining a unitary form.

13. The bicycle crank shaft assembly of Claim 12, wherein each of the first member (125), the second member (145), and the third member (150) comprise aluminum, and the bonding comprises either chemically reactive bonding or metallurgical bonding; or alternatively wherein each of the first member (125), the second member (145), and the third member (150) comprise carbon fiber reinforced polymer and the bonding comprises epoxy adhesive bonding.

14. The bicycle crank shaft assembly of any one of Claims 9-13, wherein the unitary form defines a hollow interior cavity (360) that extends in a continuous uninterrupted manner from a distal end (185) of the first crank arm (105) to a distal end (195) of the second crank arm (110).

15. A method of forming a bicycle crank shaft assembly according to any one of Claims 1-8, said method comprising the steps recited in any one of Claims 9-14.
